# EUROPÄISCHE PATENTSCHRIFT

(11) **EP 1 303 019 B1**
(45) Veröffentlichungstag und Bekanntmachung des Hinweises auf die Patenterteilung: **13.06.2007**
(21) Anmeldenummer: 02018874.4
(22) Anmeldetag: 24.08.2002
(51) Int. Cl.: H02G 15/04, H01R 13/58, H01R 13/59, H01R 13/74

(54) **Kabelverschraubung mit Zugentlastung bei einer Kabeldurchführung durch eine Gehäuseöffnung**
Cable gland with strain relief means in a cable feedthrough through a housing opening
Presse-étoupe pour câble à dispositif d'atténuation de contraintes de traction dans une traversée de câble à travers une ouverture de boîtier

(30) Priorität: 12.10.2001 DE 20116682 U; 12.10.2001 DE 20116680 U
(43) Veröffentlichungstag der Anmeldung: 16.04.2003
(73) Patentinhaber: Schmitt, Fred, 74388 Talheim (DE)
(72) Erfinder: Schmitt, Fred, 74388 Talheim (DE)
(74) Vertreter: Müller, Hans

(56) Entgegenhaltungen:
- DE-A1- 1 911 652
- DE-A1- 3 242 073
- GB-A- 2 123 222
- US-A- 4 328 392

## Beschreibung

### TECHNISCHES GEBIET

Die Erfindung betrifft eine Kabelverschraubung, die mit einer Zugentlastung ausgestattet ist. Elektrische Gehäuse, die mit elektrischen Komponenten bestückt sind, besitzen sogenannte Kabelverschraubungen, mittels derer elektrische Kabel durch die Gehäusewand in das betreffende Gehäuse hinein- beziehungsweise herausgeführt werden. Durch die Zugentlastung soll verhindert werden, dass Zugkräfte, die in axialer Richtung von außen auf den Kabelmantel des mittels der Kabelverschraubung an dem Gehäuse gehaltenen Kabels einwirken, den Kabelmantel relativ zu den im Inneren des Kabels vorhandenen Kabeladern verschieben. Ansonsten könnte nämlich der mechanisch feste Sitz der Adern in ihrer jeweiligen Kontaktierungsstelle im Inneren des Gehäuses verloren gehen.

### STAND DER TECHNIK

Die für jeweils ein Kabel vorgesehene Kabelverschraubung besitzt einen Rohrstutzen. An der Außenseite des Rohrstutzens ist ein Flanschteil einstückig angeformt. Mittels dieses Flanschteils und einer auf den Rohrstutzen aufschraubbaren Mutter kann der Rohrstutzen mit seinem einen Ende an dem Randbereich der Gehäusewand, die die Durchgangsöffnung für das Kabel einrahmt, festgeklemmt werden. Auf das andere Ende des Rohrstutzens, das aus dem Gehäuse herausragt, wird eine Überwurfmutter aufgeschraubt. Ein rohrförmiges Dichtungselement ist im Inneren des Rohrstutzens platziert. Mit seiner einen Stirnseite sitzt dieses Dichtungselement auf einer umlaufenden, einspringenden Schulter des Rohrstutzens auf. Gegen die andere Stirnseite des Dichtungselementes drückt in axialer Richtung die Überwurfmutter. Durch Aufschrauben der Überwurfmutter auf den Rohrstutzen wird das Dichtungselement in axialer Richtung zusammengedrückt mit der Folge, dass sich das Dichtungselement in radialer Richtung nach innen entsprechend ausdehnt. Dadurch kann das Dichtungselement von außen gegen den Mantel des durch den Rohrstutzen hindurchgeführten Kabels drücken. Das Kabel kann so zusammengequetscht und folglich im Bereich der Gehäuseöffnung in axialer Richtung zugfest gehalten werden.

Um beim Aufdrehen der Überwurfmutter ein entsprechendes Mitdrehen des Dichtungselementes zu verhindern, was ein entsprechendes Mitdrehen des Kabelmantels zur Folge hätte, kann die Stirnfläche des Rohrstutzens gezahnt ausgebildet sein. Beim Zusammenquetschen des Dichtungselementes drückt sich dasselbe dann mit einer Schulter gegen die gezahnte Ringfläche und wird so an einer Drehbewegung um die Kabelachse gehindert.

Die vorhandene Zugentlastung wirkt umso "kräftiger", je stärker das Kabel zusammengequetscht wird. Die Wirkung der Zugentlastung hängt also davon ab, wie stark das Kabel zusammengedrückt wird. Ein entsprechend starkes Zusammendrücken des Kabels wirkt aber auch auf die im Inneren des Kabels vorhandenen Kabeladern ein, was in elektrischer Hinsicht unerwünscht ist. Es besteht also ein Zielkonflikt zwischen der Wirksamkeit der Zugentlastung und der elektrischen Funktionstüchtigkeit der betreffenden - Kabelverbindung.

Bei mit einer Kabelabschirmung versehenem Kabel ist es darüber hinaus bekannt, das entsprechende Schirmgeflecht mittels des Dichtungselementes axial gegen Stirnwandbereiche der Kabelverschraubung zu drücken. Eine zugfeste Halterung der Kabelabschirmung ist damit nicht gegeben.

Eine Kabelverschraubung der gattungsgemäßen Art ist aus der DE 32 42 073 A bekannt. Sie ist bei einem einen inneren Schirm aufweisenden elektrischen Kabel vorhanden, das durch eine Wandung hindurchgeführt ist. Bei der Herstellung dieser Kabelverschraubung wird ein an der Wandung fest anbringbares metallisches Rohr unter den Schirm des Kabels geschoben. Der Mantel des Kabels endet in axialer Richtung vor dem Rohrende und wird somit nicht auf das Rohr mit aufgeschoben. Eine im Bereich des Rohres von außen drückend anliegende Quetschhülse kann daher nur den Schirm, nicht auch gleichzeitig den Mantel zwischen sich und dem Rohr einquetschen. Um auf den Mantel einwirkende Zugkräfte auf das Rohr übertragen zu können, ist um den Kabelmantel von außen ein Kunststoff-Schutzkörper herumgespritzt und mit dem Mantel fest verbunden. Ohne diesen Schutzkörper müssten Zugkräfte über den Schirm auf das Rohr übertragen werden, was in der Praxis zum Zerreißen des metallisch dünnen Schirms führen würde.

### DARSTELLUNG DER ERFINDUNG

Ausgehend von diesem vorbekannten Stand der Technik liegt der Erfindung die Aufgabe zugrunde, eine verbesserte Kabelverschraubung mit Zugentlastung anzugeben. Diese Erfindung ist durch die Merkmale des Hauptanspruchs gegeben. Weiterbildungen der Erfindung sind Gegenstand von sich an diesen Anspruch anschließenden weiteren Ansprüchen.

Die Erfindung beinhaltet, dass an dem im Stand der Technik an sich bekannten Rohrstutzen ein Formteil mit in axialer Richtung auskragendem hohlzylindrischen Stutzen befestigt ist. Der hohlzylindrische Stutzen sitzt eingeschoben zwischen dem Kabelmantel und den Kabeladern, wobei zwischen dem hohlzylindrischen Stutzen und dem Kabelmantel noch das Schirmgeflecht vorhanden ist. Eine von außen auf das Kabel aufgeschobene Hülse quetscht den Kabelmantel zwischen sich und dem hohlzylindrischen Stutzen ein. Die Quetschkräfte, die die Zugentlastung für das betreffende elektrische Kabel beinhalten, wirken nicht quer durch das Kabel hindurch, sondern wirken lediglich auf den Mantel ein. Aufgrund der Unverformbarkeit des in dem Kabel sitzenden hohlzylindrischen Stutzen bleiben die im Inneren des Kabels vorhandenen elektrischen Adern oder elektrischen Stiftelemente oder sonstigen elektrischen Kontaktelemente unbelastet. Die im Stand der Technik erforderliche Überwurfmutter wird überflüssig. Von Vorteil ist ferner die gegenüber dem Stand der Technik geringere Baugröße der mit einer Zugentlastung ausgestatteten erfindungsgemäßen Kabelverschraubung.

Sofern die vorstehend erfindungsgemäß vorgesehenen Teile, wie das Formteil mit seinem hohlzylindrischen Stutzen, aus metallischem Material hergestellt werden, und auch der Rohrstutzen der Kabelverschraubung ebenfalls aus metallischem Material hergestellt wird, ist eine optimale HF (Hochfrequenz)-Dichtheit vorhanden. Bei den im Stand der Technik bekannten Kabelverschraubungen ist sie aufgrund des vorhandenen Kunststoff-Dichtelementes nicht vorhanden.

Das erfindungsgemäß jeweils vorgesehene Formteil kann mit dem an ihm auskragend angebrachten Stutzen einstückig verbunden sein. Es ist allerdings auch möglich, den auskragenden Stutzen an dem Formteil zu befestigen, wie insbesondere anzunieten. Dabei kann das Formteil integraler Bestandteil des Rohrstutzens sein.

Weitere Ausgestaltungen und Vorteile der Erfindung sind den in den Ansprüchen weiterhin aufgeführten Merkmalen sowie dem nachfolgenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine teilweise geschnittene Seitenansicht einer Kabelverschraubung nach der Erfindung,
- Fig. 2: eine Ansicht längs des Pfeils 2 der Fig. 1.

### WEGE ZUM AUSFÜHREN DER ERFINDUNG

In einer kreisförmigen Öffnung 10 einer Gehäusewand 12 eines elektrischen Gehäuses ist eine Kabelverschraubung 14 für ein elektrisches Kabel 16 eingebaut.

Die Kabelverschraubung 14 besitzt einen in axialer Richtung (Längsachse 46) durch die Öffnung 10 hindurchragenden Rohrstutzen 18, der mit einem Außengewinde 20 versehen ist. An dem Rohrstutzen 18 ist ein Flanschteil 22 mit einer Sechskantform 24 auskragend angeformt. Zwischen diesem Flanschteil 22 und einer endseitig auf den Rohrstutzen 18 aufgeschraubten Mutter 26 wird der die Öffnung 10 einrahmende Randbereich der Gehäusewand 12 eingespannt gehalten. Auf diese Weise ist der Rohrstutzen 18 fest an der Gehäusewand 12 befestigt.

An dem Flanschteil 22 ist ein Formteil 40 einteilig angeformt, das in einer Art eines Ringkörpers ausgebildet ist.

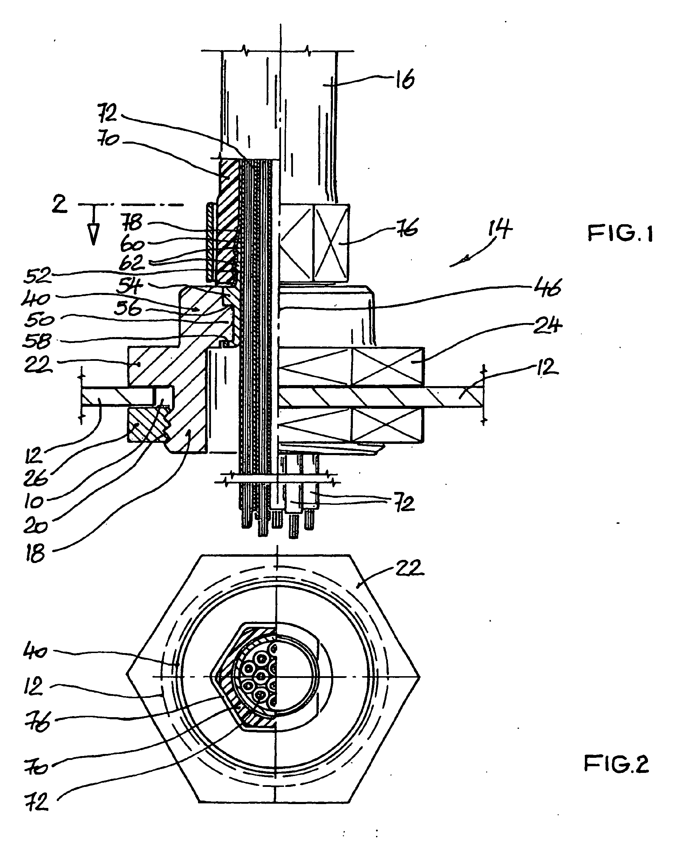

An der Innenseite des Formteils 40 ist ein radial einspringendes Ringteil 50 einteilig angeformt. An der Innenseite dieses Ringteils 50 ist ein hohlzylindrischer Stutzen 52 angenietet. Dieser hohlzylindrische Stutzen 52 besitzt eine etwa mittige Verdickung 54, die an einer Schulter 56 des Ringteils 50 anliegt. Der in Fig. 1 untere Rand 58 des Stutzens 52 ist nach außen umgebördelt und liegt in Art einer Vernietung an dem unteren Ende dieses Ringteils 50 an. Das Ringteil 50 wird also zwischen der Verdickung 54 und dem umgebogenen Rand 58 des Stutzens 52 eingespannt. Dadurch sitzt der hohlzylindrische Stutzen 52 fest an dem Formteil 40.

Das in Fig. 1 obere Ende des hohlzylindrischen Stutzens 52 besitzt eine ringförmige Spitze 60 und umlaufende Rippen 62. Die Spitze 60 dient dazu, den hohlzylindrischen Stutzen 52 zwischen den Mantel 70 und die Adern 72 des Kabels 16 zu schieben, bevor das entsprechende Kabel 16 durch die Kabelverschraubung 14 hindurchgeführt wird. Der Mantel 70 endet also vor dem Formteil 40 und wird nicht durch die Kabelverschraubung 14 hindurchgeführt.

Von außen ist eine Hülse 76 über den Mantel 70 geschoben. Mittels einer an sich bekannten Technik wird die Hülse 76 auf den Mantel 70 aufgequetscht. Der hohlzylindrische Stutzen 52 ist ausreichend biegesteif ausgebildet, so dass die Quetschkräfte, die beim Verformen der Hülse 76 auf das Kabel 16 ausgeübt werden, von dem hohlzylindrischen Stutzen 52 aufgefangen werden. Die im Inneren des hohlzylindrischen Stutzens 52 vorhandenen Adern 72 werden durch Querkräfte folglich nicht beeinflusst. Das Kabel 16 wird demzufolge durch Quetschkräfte gehalten, die lediglich auf seinen Mantel 70 - nicht auch auf seine Adern 72 - einwirken. Damit ist eine die Adern 72 nicht belastende Zugentlastung für das Kabel 16 bei der Kabelverschraubung 14 vorhanden.

Der hohlzylindrische Stutzen 52 wird bei dieser Zugentlastung nicht nur unter den Mantel 70 sondern auch unter ein Schirmgeflecht 78 geschoben, das die Adern 72 außen umhüllt. Dieses Schirmgeflecht wird an der freien Stirnfläche des Mantels 70 abgetrennt. Die Adern 72 werden also im Bereich der Kabelverschraubung allseitig von elektrisch leitendem Material umhüllt, da der hohlzylindrische Stutzen 52 und das Formteil 40 und darüber hinaus auch der Rohrstutzen 18 aus elektrisch leitendem Material bestehen. Daher ist neben der optimalen Zugentlastung auch eine hochwirksame HF-Dichtheit bei der Kabelverschraubung 14 gewährleistet.

## Patentansprüche

1. Kabelverschraubung (14) bei einem durch eine kreiszylindrische Gehäuseöffnung (10) eines elektrische Einrichtungen aufnehmenden Gehäuses hindurchführbaren elektrischen Kabel (16),
- mit einer Zugentlastung (52, 76) für das Kabel (16),
- wobei bei dem durch die Gehäuseöffnung (10) hindurchführbaren Kabel (16) dasselbe im Inneren eines in der Gehäuseöffnung (10) einsetzbaren Rohrstutzens (18) führbar ist,
- dieser Rohrstutzen (18) an der die Gehäuseöffnung (10) einrahmenden Gehäusewand (12) mittels einer auf den Rohrstutzen (18) aufschraubbaren Mutter (26) und eines am Rohrstutzen (18) angeformten Flanschteils (22) festklemmbar ist,
- mit einem hohlzylindrischen Formteil (40), das am Rohrstutzen (18) in axialer Richtung fest angebracht ist,
- mit einem hohlzylindrischen Stutzen (52), der an dem Formteil (40) in axialer Richtung auskragend vorhanden ist,
- mit einer Hülse (76) im Querschnittsbereich des auskragenden Stutzens (52), die an dem Kabel (16) positionierbar und an dem Kabel (16) fest anpressbar ist,
**dadurch gekennzeichnet, dass**
- der hohlzylindrische Stutzen (52) auch von der Kabelinnenseite her an dem Kabelmantel (70) anlegbar ist, so dass die aus der Hülse (76) und dem hohlzylindrischen Stutzen (52) bestehende Zugentlastung gleichzeitig von der Kabelinnenseite und von der Kabelaußenseite her an dem Kabelmantel (16) klemmend anlegbar ist.

2. Kabelverschraubung nach Anspruch 1,
**dadurch gekennzeichnet, dass**
- der Rohrstutzen (18), das Formteil (40) und der auskragende Stutzen (52) aus metallischem Material bestehen.

3. Kabelverschraubung nach einem der vorstehenden Ansprüche,
**dadurch gekennzeichnet, dass**
- das Formteil (40) einstückig mit dem auskragenden Stutzen (52) verbunden ist.

4. Kabelverschraubung nach Anspruch 1 oder 2,
**dadurch gekennzeichnet, dass**
- der auskragende Stutzen (52) an dem Formteil (40) befestig, wie insbesondere angenietet ist.

## Claims

1. Cable gland (14) for an electrical cable (16) which can be passed through a circular-cylindrical housing opening (10) in a housing which holds electrical devices,
- having strain relief (52, 76) for the cable (16),
- in which case the cable (16) which can be passed through the housing opening (10) can be guided in the interior of a tubular connecting stub (18) which can be inserted into the housing opening (10),
- this tubular connecting stub (18) can be firmly clamped to the housing wall (12) which surrounds the housing opening (10), by means of a nut (26), which can be screwed to the tubular connecting stub (18), and a flange part (22) which is integrally formed on the tubular connecting stub (18),
- having a hollow-cylindrical moulding (40), which is firmly fitted to the tubular connecting stub (18) in the axial direction,
- having a hollow-cylindrical connecting stub (52), which is provided on the moulding (40) such that it projects in the axial direction,
- having a sleeve (76) in the cross-sectional area of the projecting connecting stub (52) which can be positioned on the cable (16) and can be firmly pressed against the cable (16)
**characterized in that**
- the hollow-cylindrical connecting stub (52) can also be placed against the cable sheath (70) from the cable inside, such that the strain relief, which comprises the sleeve (76) and the hollow-cylindrical connecting stub (52) can at the same time be placed on the cable sheath (16) in a clamping manner, from the cable inside and from the cable outside.

2. Cable gland according to claim 1,
**characterized in that**
- the tubular connecting stub (18), the molding (40) and the projecting connecting stub (52) are composed of metallic material.

3. Cable gland according to one of the preceding claims,
**characterized in that**
- the molding (40) is integrally connected to the projecting connecting stub (52).

4. Wiring according to claim 1 or 2,
**characterized in that**
- the projecting connecting stub (52) is attached to the molding (40), in particular being riveted to it.

## Revendications

1. Passe-câble à vis (14) pour un câble électrique (16) pouvant passer à travers une ouverture cylindrique (10) d'un boîtier abritant des dispositifs électriques,
- comprenant un dispositif (52, 76) pour soulager la traction s'exerçant sur le câble (16),
- le câble (16) pouvant passer à travers l'ouverture de boîtier (10) pouvant être guidé à l'intérieur d'une tubulure (18) pouvant être logée dans l'ouverture de boîtier (10),
- cette tubulure (18) pouvant être fixée sur la paroi de boîtier (12) encadrant l'ouverture de boîtier (10) au moyen d'un écrou (26) pouvant être vissé sur la tubulure (18) et d'une bride (22) ménagée sur la tubulure (18),
- comprenant également une pièce moulée cylindrique creuse (40) fixée à la tubulure (18) dans la direction axiale,
- un manchon (52) cylindrique creux faisant saillie de la pièce moulée (40) dans la direction axiale,
- une douille (76) au niveau de la section transversale du manchon en saillie (52), qui peut être positionnée sur le câble (16) et étroitement pressée contre le câble (16),
**caractérisé en ce que**
- le manchon cylindrique creux (52) peut également être appliqué contre la gaine (70) du câble de l'intérieur du câble, de sorte que le dispositif pour soulager la traction du câble, qui est composé de la douille (76) et du manchon cylindrique creux (52), peut être appliqué avec serrage contre la gaine (16) du câble à la fois de l'intérieur et de l'extérieur du câble.

2. Passe-câble à vis selon la revendication 1, **caractérisé en ce que** la tubulure (18), la pièce moulée (40) et le manchon en saillie (52) sont composés d'une matière métallique.

3. Passe-câble à vis selon l'une des revendications précédentes, **caractérisé en ce que** la pièce moulée (40) fait corps avec le manchon en saillie (52).

4. Passe-câble à vis selon la revendication 1 ou 2, **caractérisé en ce que** le manchon en saillie (52) est fixé à la pièce moulée (40), notamment riveté.
